# EUROPÄISCHE PATENTSCHRIFT

(11) **EP 3 150 466 B1**
(45) Veröffentlichungstag und Bekanntmachung des Hinweises auf die Patenterteilung: **11.04.2018**
(21) Anmeldenummer: 16188525.6
(22) Anmeldetag: 13.09.2016
(51) Int. Cl.: B62D 25/04, B62D 29/00

(54) **B-SÄULE FÜR EINE KRAFTFAHRZEUGKAROSSERIE UND VERFAHREN ZUM HERSTELLEN EINER B-SÄULE**
B-PILLAR FOR A MOTOR VEHICLE BODY AND PROCESS OF PRODUCING A B-PILLAR
COLONNE B POUR CARROSSERIE DE VEHICULE ET SON PROCEDE DE PRODUCTION

(30) Priorität: 14.09.2015 DE 102015115439
(43) Veröffentlichungstag der Anmeldung: 05.04.2017
(73) Patentinhaber: Muhr und Bender KG, 57439 Attendorn (DE)
(72) Erfinder: Steffens, Hubertus, 57489 Drolshagen (DE); Spielvogel, Bernhard, 5271 Moosbach (AT)
(74) Vertreter: Neumann Müller Oberwalleney & Partner Patentanwälte

(56) Entgegenhaltungen:
- EP-A1- 1 912 849
- EP-A2- 1 867 559
- DE-A1-102013 017 269
- DE-A1-102014 003 378

## Beschreibung

Die vorliegende Erfindung betrifft eine B-Säule für eine Kraftfahrzeugkarosserie, mit einer Innenschale aus Blechmaterial und einer Außenschale, die mit der Innenschale verbunden ist. Des Weiteren betrifft die vorliegende Erfindung ein Verfahren zum Herstellen einer entsprechenden B-Säule für eine Kraftfahrzeugkarosserie.

Innerhalb der Kraftfahrzeugkarosserie stellt die B-Säule eines der anspruchsvollsten Bauteile hinsichtlich des Gewichtseinflusses, der Steifigkeit und Eigenfrequenz dar. Die B-Säule ist üblicherweise aus zwei oder mehreren Schalenbauteilen hergestellt und weist zumindest eine Innenschale, die im eingebauten Zustand an der Fahrzeugkarosserie einem Fahrzeuginnenraum zugewandt ist, und eine Außenschale, die entsprechend vom Fahrzeuginnenraum abgewandt ist, auf. Die Außenschale, welche auch als Außenblech oder B-Säule außen bezeichnet werden kann, kann als U-profilförmiger Stahlkörper ausgeführt sein, welcher von der Fahrzeuginnenseite mit der Innenschale, welche auch als Deckel, Schließblech, Innenblech oder B-Säule innen bezeichnet werden kann, verschlossen ist. Um die beiden Schalen miteinander zu verbinden, können diese seitliche Füge- und Verbindungsflansche aufweisen, die mittels Punktschweißverfahren miteinander verbunden sein können. Die in der Kraftfahrzeugkarosserie integrierte B-Säule kann dann in weiteren Fügeprozessen insbesondere mit der Außenhaut der Fahrzeugkarosserie, dem Dach oder mit Glasflächen verbunden werden.

Aus der DE 10 2014 116 118 A1 ist ein Außenteil einer B-Säule bekannt, das ein Seitenaußenpaneel, ein oberes Paneel, ein unteres Paneel und ein Seiteninnenpaneel aufweist. Das Seiteninnenpaneel, das obere Paneel und das Seitenaußenpaneel des Außenteils der B-Säule sind entlang seitlicher Verbindungsflansche zusammengefügt. Das obere Paneel ist entlang eines Überlappungsbereiches mit dem unteren Paneel verbunden.

Die seitlichen Füge- und Verbindungsflansche führen zu einer Doppelung der Materialien der Außenschale und der Innenschale im diesen Verbindungsbereichen. Durch die Verbindung der beiden Schalen mittels Punktschweißung, welche entlang der Füge- und Verbindungsflansche üblicherweise nur alle 30 bis 50 Millimeter erfolgt, werden die Außenschale und die Innenschale nur partiell miteinander verbunden. Zudem entstehen durch die punktuell eingebrachte Erhitzung in den Werkstoff der Schalen beim Punktschweißen partielle Weichzonen in den Flanschen, die bei einem Eintrag einer Crashenergie zum Startpunkt eines Risses neigen, was schließlich zu einem Rissversagen der B-Säule führen kann.

Weiterhin ist es üblich, vor allem die Außenschale aus einem Tailor Rolled Blank oder Tailor Welded Blank herzustellen, um die Blechdicke in Längserstreckung der Außenschale zu variieren. Dadurch können verstärkte Bereiche, schwächere Bereiche beziehungsweise weichere Bereiche zur gezielten Beeinflussung des Crashverhalten der Fahrzeugsäule ausgebildet werden, um die B-Säule an anwendungs- oder marktspezifische Vorgaben anzupassen. Allerdings muss dieser Dickenverlauf zumindest im Bereich der miteinander punktverschweißten Füge- und Verbindungsflansche auch auf die Innenschale übertragen werden. Dadurch müssen allerdings für die unterschiedlichen Außenschalen korrespondiere Innenschalen bereitgestellt werden. Dies geht mit einem hohen Kosten- und Logistaufwand einher.

Um das Gewicht der B-Säule zu reduzieren, ist bekannt, die Schalen dünnwandiger oder aus Leichtmetallen herzustellen und zur Erhöhung deren Steifigkeit durchgehend oder lokal mit faserverstärkten Kunststoffen zu verstärken.

Aus der EP 1 867 559 A2 ist eine B-Säule bekannt, die einen mehrschaligen Aufbau mit einem Außenblech und einem mit diesem verschweißten Innenblech aufweist. Zur Verstärkung der B-Säule weist diese ein Aufprallschutz-Verstärkungsteil aus einem faserverstärkten Kunststoff auf, das an einer Innenseite des Innenblechs aufgeklebt ist.

Aus der DE102013017269 ist eine weitere B-Säule mit einem mehrschaligen Aufbau bekannt, wobei eine Innenschale und eine mit der Innenschale verbundene Außenschale zur Gewichtsreduzierung aus Aluminiumblechen hergestellt sind. Zur Verstärkung der B-Säule sind zwischen der Innenschale und der Außenschale Verstärkungselemente angeordnet. Ein erstes der Verstärkungselemente ist ein Blechteil aus einer Aluminiumlegierung. Ein zweites der Verstärkungselemente ist aus einem faserverstärkten Kunststoff hergestellt, welches zwischen dem ersten Verstärkungselement und der Innenschale aufgenommen ist.

Weitere hybride Karosseriebauteile sind beispielsweise aus der DE 10 2012 203 888 A1 und der DE 10 2011 111 232 A1 bekannt. Um stark belastete Bereiche eines Karosseriebauteils zu verstärken, ist bekannt, die Blechbauteile in den hochbelasteten Bereichen zusätzlich mit faserverstärkten Kunststoffbauteilen zu versteifen.

Durch den mehrschaligen Aufbau, bedingt durch den Einsatz weiterer Verstärkungsschalen neben der Außenschale und der Innenschale, oder durch lokal aufgebrachte faserverstärkte Kunststoff-Verstärkungselemente, gestaltet sich die Herstellung derartiger B-Säulen kostenaufwendig. Zudem wirken zusätzliche Verstärkungen der Forderung nach Leichtbau entgegen.

Der vorliegenden Erfindung liegt die Aufgabe zugrunde, eine bauteilreduzierte und weiter gewichtsreduzierte B-Säule bereitzustellen, die eine hohe Steifigkeit aufweist und anspruchsvolle Crash-Lastfälle erfüllt. Die Aufgabe besteht ferner darin, ein entsprechendes Verfahren vorzuschlagen, mit dem eine bauteilreduzierte und weiter gewichtsreduzierte B-Säule mit einer hohen Steifigkeit erzeugt werden kann, die anspruchsvolle Crash-Lastfälle erfüllt.

Eine Lösung besteht in einer B-Säule der eingangs genannten Art, bei der die Außenschale mehrteilig ausgebildet ist und ein unteres Formteil aus Blechmaterial und ein oberes Formteil aus faserverstärktem Kunststoff aufweist, wobei die beiden Formteile nur entlang eines Überlappungsbereiches einander überlappend angeordnet und miteinander verbunden sind, derart, dass das untere Formteil das obere Formteil über den Überlappungsbereich hinaus in einer ersten Längserstreckungsrichtung der B-Säule überragt und das obere Formteil das untere Formteil über den Überlappungsbereich hinaus in einer zweiten Längserstreckungsrichtung der B-Säule überragt.

Erfindungsgemäß ist somit vorgesehen, dass die Außenschale der B-Säule ein mehrteiliges Hybridbauteil ist. Das heißt das untere Formteil aus Blechmaterial und das obere Formteil aus faserverstärktem Kunststoff bilden zusammen funktional die Außenschale der B-Säule. Die beiden Formteile sind versetzt zueinander angeordnet und überlappen sich entlang eines definierten Längsabschnitts der B-Säule, der hier als Überlappungsbereich bezeichnet ist. Der Überlappungsbereich dient der Verbindung der beiden Formteile miteinander, die somit nur im Überlappungsbereich miteinander verbunden sind. Entsprechend ist die Außenschale oberhalb des Überlappungsbereiches nur durch das obere Formteil gebildet. Dadurch wird der obere Bereich der hybriden Außenschale allein durch die Eigenschaften des aus faserverstärktem Kunststoff hergestellten oberen Formteils bestimmt. Entsprechendes gilt in analoger Weise für den unteren Bereich der Außenschale, der nur durch das aus Blechmaterial hergestellte untere Formteil gebildet ist. Dadurch wird eine leichte Außenschale und zusammen mit der aus Blechmaterial hergestellten Innenschale insgesamt eine leichte und bauteilreduzierte hybride B-Säule bereitgestellt.

Der Überlappungsbereich der Außenschale liegt in einem mittleren Bereich der B-Säule, der zum Schutz der Insassen bei einem Crash mit einer hohen Festigkeit ausgelegt wird. Insofern ist von Vorteil, dass die B-Säule durch die Materialdoppelung des aus Blechmaterial hergestellten unteren Formteils und des aus faserverstärktem Kunststoff hergestellten oberen Formteil im Überlappungsbereich verstärkt ausgebildet ist. In diesem durch die Überlappung der beiden Formteile verstärkten Längsbereich, das heißt dem Überlappungsbereich, sind im eingebauten Zustand der B-Säule an der Kraftfahrzeugkarosserie üblicherweise Funktionsteile, wie beispielsweise eine Aufnahme oder eine Anbindungsstelle für ein Schließkeil für die Vordertüre, ein Türschloss, ein Türscharnier oder ein hinterer Türfeststeller, vorgesehen. Weiterhin weist die B-Säule einen unteren Längsbereich, der auch als Fußbereich bezeichnet wird, und einen oberen Längsbereich, der auch als Kopfbereich bezeichnet wird, auf. Dabei stellen die Begriffe nach unten beziehungsweise oben und Mitte räumliche Angaben in Bezug auf die B-Säule im eingebauten Zustand an der Kraftfahrzeugkarosserie dar.

Das untere Formteil, dass sich in die erste Längserstreckungsrichtung der B-Säule, das heißt nach unten in den Fußbereich der B-Säule, erstreckt, ist üblicherweise mit einem Seitenschweller der Kraftfahrzeugkarosserie verbunden. Dagegen kann das obere Formteil, das sich in die zweite Längserstreckungsrichtung der B-Säule, das heißt nach oben in den Kopfbereich der B-Säule, erstreckt, an ein Dach oder eine Dachstrebe angebunden sein. Sowohl die erste als auch die zweite Längserstreckungsrichtung sind als Vektoren zu verstehen, die insbesondere in zwei zueinander entgegengesetzte Richtungen der B-Säule zeigen. Im Unterschied zu dem durch die Materialdoppelung steif ausgelegten Überlappungsbereich weisen der obere Bereich der B-Säule mit dem oberen Formteil und/oder der untere Bereich der B-Säule mit dem unteren Formteil ein im Vergleich zum Überlappungsbereich hohes Crash-Absorptionsvermögen auf.

Gemäß einem Aspekt der vorliegenden Erfindung ist vorgesehen, dass eine Längserstreckung des Überlappungsbereiches kleiner als 70% einer Längserstreckung des unteren Formteils und/oder kleiner als 50% einer Längserstreckung des oberen Formteils. Dadurch kann das Gewicht der B-Säule weiter reduziert werden. Somit ist der Überlappungsbereich auf eine zur Verbindung der beiden Formteile und zur Anbindung der vorgenannten Funktionsteile maximal notwendige Größe, respektive Fläche begrenzt. Unter der Längserstreckung ist die maximale Erstreckung des Überlappungsbereiches beziehungsweise des jeweiligen Formteils in der ersten und/oder zweiten Längserstreckungsrichtung der länglichen B-Säule zu verstehen.

Weiterhin kann sich das untere Formteil, ausgehend von dem Fußende der B-Säule in der zweiten Längserstreckungsrichtung, das heißt nach oben in Richtung des Kopfendes der B-Säule, jedoch nicht über den Überlappungsbereich hinaus, über maximal 70 % der maximalen Längserstreckung der B-Säule erstrecken. Alternativ oder in Ergänzung kann sich das Formteil über mindestens 40 %, insbesondere 50 % der maximalen Längserstreckung der B-Säule erstrecken. Das obere Formteil kann sich, ausgehend vom Kopfende der B-Säule in der ersten Längserstreckungsrichtung, das heißt nach unten in Richtung des Fußendes der B-Säule, jedoch nicht über den Überlappungsbereich hinaus, über maximal 80 % der maximalen Längserstreckung der B-Säule erstrecken. Alternativ oder in Ergänzung kann sich das Formteil über mindestens 50 %, insbesondere 60 % der maximalen Längserstreckung der B-Säule erstrecken.

Das untere Formteil und das obere Formteil können im Überlappungsbereich zumindest eines von stoffschlüssig, kraftschlüssig und formschlüssig miteinander verbunden sein, vorzugsweise durch mindestens zwei der genannten Verbindungsarten, insbesondere alle drei Verbindungsarten. Durch den Stoff-, Kraft- und Formschluss wird eine besonders stabile Verbindung zwischen den beiden Formteilen erzielt.

Unter einem Stoffschluss werden alle stoffschlüssigen Verbindungen verstanden, bei denen die Verbindungspartner, hier das untere Formteil und das obere Formteil, durch atomare oder molekulare Kräfte zusammengehalten werden. Die stoffschlüssigen Verbindungen sind zudem nicht lösbare Verbindungen, die sich nur durch Zerstörung der Fügestelle trennen lassen. Der Stoffschluss kann beispielsweise durch Löten, Schweißen, Kleben oder Vulkanisieren erzeugt werden. Vorzugsweise sind das obere Formteil und das untere Formteil im Überlappungsbereich miteinander verklebt.

Als kraftschlüssige Verbindung wird eine Sicherung der Verbindung zweier Verbindungspartner verstanden, bei der eine äußere Kraft, meist eine Reibungskraft, die beiden Verbindungspartner in ihrer gegenseitigen Lage zueinander hält. Ein Kraftschluss kann zum Beispiel durch eine Schraub-, Niet- oder Nagelverbindung oder eine Klemmverbindung hergestellt werden.

Des Weiteren kann das obere Formteil im Überlappungsbereich von außen auf das untere Formteil aufgesetzt, insbesondere flächig aufgesetzt sein. Das heißt das obere Formteil kann das untere Formteil von außen umgreifen. Dadurch wird eine stabile Verbindung zwischen den beiden Formteilen bereitgestellt. Das obere Formteil und das untere Formteil können im Überlappungsbereich formschlüssig miteinander verbunden sein. Eine formschlüssige Verbindung ist durch zweier Verbindungspartner bedingt, wobei die zu verbindenden Teile korrespondierende Gestalt besitzen, das heißt gegengleich ausgebildet sind. Auf diese Weise ist eine Bewegung der beiden Verbindungspartner gegeneinander nicht möglich ist. Infolgedessen können Kräfte und Drehmomente von dem einem auf das andere Formteil übertragen werden. Durch den Formschluss zwischen dem oberen Formteil und dem unteren Formteil wird die Verbindung zwischen den beiden Formteilen zusätzlichen verstärkt. Entscheidend ist, dass die beiden Formteile außerhalb des Überlappungsbereiches nicht miteinander verbunden sind.

Zweckmäßigerweise sind das untere Formteil und das obere Formteil im Überlappungsbereich durch Befestigungsmittel kraftschlüssig miteinander verbunden. Insbesondere sind die Befestigungsmittel zum Anbringen von an der B-Säule gehaltenen Funktionsteilen ausgebildet. Dadurch kann die Teilevielzahl der B-Säule weiter reduziert werden. Auf diese Weise können die Befestigungsmittel, welche ohnehin zum Anbringen der Funktionsteile für das Kraftfahrzeug, beispielsweise der Türscharniere oder hinteren Türfeststeller, benötigt werden, auch für die kraftschlüssige Verbindung zwischen dem unteren Formteil und dem oberen Formteil eingesetzt werden. Die Befestigungsmittel können beispielsweise Schrauben und/oder Nieten umfassen.

Weiterhin kann im Überlappungsbereich auf einer von der Innenschale abgewandten Außenfläche des oberen Formteils ein Verstärkungselement aus Blechmaterial zur Abstützung zumindest einer Teilmenge der Befestigungsmittel angeordnet sein. Dadurch wird verhindert, dass beim Eintrag einer Crashenergie, beispielsweise bei einem Seitenaufprall, die Befestigungsmittel durch das aus faserverstärktem Kunststoff hergestellte obere Formteil gedrückt werden und das obere Formteil quasi ausstanzen. Das Verstärkungselement kann in Form eines Blechstückes, welches auch als Patch bezeichnet werden kann, ausgebildet sein. Hierzu kann das Verstärkungselement aus einem Metallblech, insbesondere einem Stahlblech hergestellt sein.

Um eine Kontaktkorrosion der zumeist metallischen Befestigungsmittel mit dem oberen Formteil, welches beispielsweise aus einem kohlenstofffaserverstärktem Kunststoff (CFK) hergestellt sein kann, zu verhindern, kann im oberen Formteil für zumindest eine Teilmenge der Befestigungsmittel, insbesondere für alle Befestigungsmittel, die das obere Formteil durchgreifen, jeweils eine Hülse eingesetzt sein. Alternativ oder zusätzlich zur wenigstens einen Hülse können die Befestigungsmittel aus korrosionsbeständigen Materialien, beispielsweise Titan, verwendet werden.

Des Weiteren kann zur Vermeidung einer Kontaktkorrosion zwischen dem aus Blechmaterial hergestellten unteren Formteil und dem oberen Formteil im Überlappungsbereich und/oder zwischen dem oberen Formteil und dem Verstärkungselement aus Blechmaterial jeweils eine Sperrschicht vorgesehen sein. Die Sperrschicht kann insbesondere eine Lackierung oder ein dünnwandiges korrosionshinderndes Bauteil sein, welches im Überlappungsbereich zwischen den beiden Formteilen angeordnet sein kann.

Gemäß einem weiteren Aspekt der erfindungsgemäßen B-Säule kann die Innenschale zumindest etwa in der zweiten Längserstreckungsrichtung verlaufende Stützbereiche und das obere Formteil entsprechende, insbesondere gegengleich geformte, Verbindungsabschnitte zum Verbinden mit den Stützbereichen aufweisen. Weiterhin können die Innenschale und das obere Formteil außerhalb des Überlappungsbereiches formschlüssig und/oder stoffschlüssig miteinander verbunden sein. Dadurch wird eine ausreichend stabile Verbindung zwischen dem oberen Formteil und der Innenschale bereitgestellt. Außerhalb des Überlappungsbereichs stützt sich das obere Formteil mit seinen Verbindungsabschnitten auf den Stützbereichen der Innenschale und insbesondere dem oberen Flanschabschnitt ab. Zur Vermeidung einer Kontaktkorrosion zwischen der aus Blechmaterial hergestellten Innenschale und dem oberen Formteil kann eine weitere Sperrschicht vorgesehen sein. Die Stützbereiche verlaufen zumindest etwa in der zweiten Längserstreckungsrichtung, sodass die Stützbereiche in der Längserstreckungsrichtung auch einer oft aus designtechnischen Gründen nicht vollständig geraden, sondern leicht gebogen B-Säule folgen kann. Somit ist unter dem Begriff zumindest etwa in der zweiten Längserstreckungsrichtung neben einem geraden Verlauf der Stützbereiche auch ein geschwungener Verlauf der Stützbereiche zu verstehen. Grundsätzlich kann das obere Formteil auch erst dann mit dem unteren Formteil und/oder der Innenschale verbunden werden, wenn die Innenschale und das untere Formteil als quasi halbfertige B-Säule bereits an der Fahrzeugkarosserie befestigt sind. Auf diese Weise kann das obere Formteil im Fahrzeugrohbau zugelegt werden.

Des Weiteren können die Stützbereiche außerhalb des Überlappungsbereiches Nuten aufweisen, in denen die Verbindungsabschnitte des oberen Formteils formschlüssig eingreifen und/oder stoffschlüssig fixiert sind. Eine tragende Verbindung zwischen dem oberen Formteil und der Innenschale entlang der Nuten ist jedoch nicht erforderlich. Grundsätzlich genügt eine rein formschlüssige Verbindung zwischen dem oberen Formteil und der Innenschale, sodass ein Stoffschluss hier nicht notwendig ist. Vorzugsweise greift das obere Formteil zur Herstellung des Formschlusses mit den Verbindungsabschnitten in die Nuten. Je nach Anwendungsfall kann das obere Formteil in den Nuten der Innenschale auch stoffschlüssig fixiert sein. Zur Herstellung des Stoffschlusses können die Überlappungsbereiche des oberen Formteils in den Nuten mit der Innenschale verklebt sein.

Weiterhin kann vorgesehen sein, dass die Verbindungsabschnitte des oberen Formteils in Form von umgebogenen Randbereichen des oberen Formteils gebildet sind. Durch die umgelegten, respektive umgebogenen Randbereiche, die die Verbindungsabschnitte des oberen Formteils bilden, wird der mit Zugspannungen belastete Randbereich des oberen Formteils verstärkt und die Kerbempfindlichkeit reduziert.

Das obere Formteil kann außerhalb des Überlappungsbereiches zumindest abschnittsweise einen U-förmigen Querschnitt aufweisen und derart ausgebildet sein, dass eine Außenwandung des oberen Formteils bei einer von außen auf die Außenschale einwirkenden Kraft, insbesondere einem Eintrag einer Crashenergie in einem Crashfall, bis zu 10% eines bauseitig festgelegten Abstandes der Außenwandung zur Innenschale in Richtung der Innenschale elastisch federt. Dadurch werden die Crasheigenschaften der B-Säule verbessert. Oberhalb des Überlappungsbereiches ist die B-Säule somit federartig und weist eine im elastischen Bereich deformierbare Grundform auf.

Des Weiteren können die Verbindungsabschnitte des zumindest abschnittsweise U-förmigen oberen Formteils an Randbereichen von zwei Seitenwandungen des oberen Formteils gebildet sein, wobei zwischen der Außenwandung und den jeweiligen Seitenwandungen ein Winkel zwischen 100° und 170°, insbesondere zwischen 100° und 140°, eingeschlossen sind. Durch die schräge Anstellung der Seitenwandungen, die quasi V-förmig nach außen gedreht sind, wird eine besonders stabile Verbindung zwischen dem oberen Formteil und der Innenschale bereitgestellt. Dabei kann die B-Säule und insbesondere das obere Formteil auf eine geforderte Festigkeit hin getrimmt, respektive angepasst werden, indem zum Beispiel der Winkel zwischen der Außenwandung und der jeweils angrenzenden Seitenwand verändert wird. Weiterhin können einzelne Teilbereiche des Kopfbereiches der B-Säule, insbesondere des oberen Formteils neben der Veränderung des Winkels auch mittels Formgebung und/oder Wandstärke und/oder Gelegeausführung des faserverstärkten Kunststoffs auf das geforderte Zielverhalten getrimmt werden. Beispielsweise können zur Wandstärkenvariation des oberen Formteils gezielt Bereiche, insbesondere Übergänge, Ecken oder dergleichen mit weiteren Faserlagen verstärkt werden.

Weiterhin kann das Crashverhalten der B-Säule im Kopfbereich dadurch getrimmt werden, dass das obere Formteil in Übergangsbereichen zwischen der Außenwandung und Seitenwandungen des oberen Formteils jeweils eine gelenkartige Materialschwächung, eine Kerbe oder eine Knickstelle aufweist. Durch die gezielt in den Übergangsbereichen eingebrachte Schwächung des oberen Formteils kann das Federverhalten der B-Säule bei einer von außen auf die B-Säule einwirkenden Kraft getrimmt werden. Beim Seitenaufprall kann somit die Außenwandung des oberen Formteils in Richtung der Innenschale gedrückt werden, wobei die Seitenwandungen nachgeben können, indem sie sich relativ zur Innenschale aufstellen.

Weiterhin kann die Innenschale einen materialgeschwächten Abschnitt aufweist, der zwischen den Seitenwandungen des oberen Formteils angeordnet ist. Der materialgeschwächte Abschnitt kann sich oberhalb des Überlappungsbereiches in der zweiten Längserstreckungsrichtung der B-Säule erstrecken. Grundsätzlich können aber auch weitere Abschnitte der Innenschale künstlich geschwächte Abschnitte aufweisen. Der materialgeschwächte Abschnitt weist eine höhere Elastizität als die umliegenden Abschnitte der Innenschale auf. Dadurch können sich beim Seitenaufprall die in die Nuten der Innenschale eingreifenden Seitenwandungen des zumindest abschnittsweise U-förmigen oberen Formteils relativ zur Innenschale aufstellen, das heißt den Abstand zwischen den freien Längsenden der Seitenwandungen verringern. Dabei bewegen sich die Längsenden der Seitenwandungen aufeinander zu und stauchen den materialgeschwächten Abschnitt der Innenschale. Auf diese Weise kann das obere Formteil bis zu einem gewissen Grad mehr Energie aufnehmen, da die Innenschale nachgeben kann und keine zusätzlichen Spannungen, die bei einer Innenschale ohne einen solchen materialgeschwächten Abschnitt erzeugt würden, im oberen Formteil erzeugt. Da das obere Formteil als faserverstärktes Kunststoffteil nur eine sehr geringe Bruchdehnung aufweist und bei Überschreiten der Bruchkraft plastisch versagen würde, ist die notwendigerweise aufzubringende Bruchkraft durch die künstlich geschwächte Innenschale erhöht. Auf diese Weise kann das obere Formteil besser elastisch federn und kann bei einem Seitenaufprall mehr Energie aufnehmen, ohne zu brechen. Wenn die einwirkende Crashenergie unterhalb der Bruchkraft des oberen Formteils bleibt, können sich die Seitenwandungen des oberen Formteils nach Entlastung wieder nach außen bewegen, das heißt der Abstand zwischen den freien Längsenden der Seitenwandungen vergrößert sich wieder. Auf diese Weise kann das obere Formteil elastisch federn, quasi atmen. Die Innenschale wird dann entlang des materialgeschwächten Abschnitts durch die sich nach außen bewegenden freien Längsenden, die in die Nuten der Innenschale eingreifen, wieder auseinandergezogen und das obere Formteil gibt die aufgenommene Energie wieder ab.

Gemäß einem weiteren Aspekt der vorliegenden Erfindung ist vorgesehen, dass das untere Formteil wenigstens einen Schweißabschnitt zum Verbinden mit der Innenschale aufweist. Das Schweißen kann beispielsweise mittels Widerstandsschweißen beziehungsweise Punktschweißen durchgeführt werden. Nach einer alternativen Möglichkeit können das untere Formteil und die Innenschale mittels einer Hochenergieschweißnaht entlang einer Verbindungskante des wenigstens einen Schweißabschnitts miteinander verbunden werden. Unabhängig vom Schweißverfahren ist die Verbindungskante des unteren Formteils von einer Außenkante der Innenschale derart beabstandet, dass die Innenschale zwischen der Verbindungskante und der Außenkante einen einlagigen Flanschabschnitt der B-Säule bildet. Durch die gegenüber der Außenkante der Innenschale zurückgesetzte Verbindungskante des unteren Formteils kann ein Schweißgerät zur Erzeugung der Schweißnaht auf einfache Weise seitlich angesetzt werden.

Vorzugsweise erstreckt sich die Schweißnaht über wenigstens 50 % der Längserstreckung der Verbindungskante und insbesondere über wenigstens 50 % der Längserstreckung des unteren Formteils. Somit kann auf eine Punktverschweißung des unteren Formteils mit der Innenschale verzichtet werden, was jedoch als Option grundsätzlich nicht ausgeschlossen ist. Durch eine Hochenergieschweißnaht wird insgesamt eine stabilere Verbindung zwischen dem unteren Formteil und der Innenschale bereitgestellt, die aufgrund einer im Vergleich zum Punktschweißen gleichmäßigeren Hitzeeintrag keine lokale Weichzonen aufweisen, die im Crashfall als Startpunkt von Rissen dienen können. Darüber hinaus wird durch die Rückstellung des unteren Formteils gegenüber der Innenschale eine Dopplung der Materialien durch eine Überlagerung des oberen Formteils über den einlagigen Flanschabschnitt der Innenschale vermieden, wodurch Gewicht unmittelbar am unteren Formteil eingespart und insgesamt eine leichtere B-Säule bereitgestellt wird.

Zudem eignet sich der einlagige Flanschabschnitt der B-Säule, der auch als Schweißflansch bezeichnet werden kann, besonders gut zum Verschweißen mit weiteren Komponenten, beispielsweise einer Außenhaut des Kraftfahrzeuges, die mit der B-Säule in deren eingebauten Zustand gefügt wird. Ebenso eignet er sich zur Anbindung zur Anbindung von Glasflächen. Somit müssen weitere Komponenten, wie die Außenhaut, Glasflächen oder das Dach, nur noch mit der Innenschale verbunden werden. Das ist besonders dann von Vorteil, wenn das untere Formteil der Außenschale schlechte Schweißeigenschaften aufweist. Dies ist beispielsweise dann der Fall, wenn das untere Formteil warmumgeformt und/oder gehärtet ist. Die Innenschale ist dagegen üblicherweise kaltumgeformt und weist gute Schweißeigenschaften auf.

Dadurch, dass das untere Formteil durch eine seitlich angesetzte Schweißnaht mit der Innenschale verbunden ist, können die Innenschale und das untere Formteil unterschiedliche Wanddicken aufweisen. Somit kann das Crashverhalten der B-Säule durch Variierung der Wanddicken in Teilbereichen der Außenschale gezielt beeinflusst werden. Vorzugsweise ist das untere Formteil aus einem Tailor Rolled Blank oder Tailor Welded Blank hergestellt und weist somit in der maximalen Quererstreckung eine gleichbleibende Wanddicke auf. Somit kann das untere Formteil gezielt lokal an den jeweiligen Belastungsfall angepasst werden. Weniger stark beanspruchte Teilbereiche des unteren Formteils beziehungsweise der B-Säule können eine geringere Wanddicke aufweisen, wodurch der Materialeinsatz des unteren Formteils reduziert wird und insgesamt das Gewicht der B-Säule verringert wird. Im Umkehrschluss können besonders stark beanspruchte Teilbereiche des unteren Formteils beziehungsweise der B-Säule dicker und somit stabiler ausgebildet sein. Ebenso kann auch das obere Formteil eine variable Wanddicke aufweisen, wobei die Wanddicke durch Gelegeausführung des faserverstärkten Kunststoffes auf einfache Weise angepasst werden kann. Im Ergebnis kann auch bei unterschiedlichen Wanddickenprofilen diverserer Außenschalen stets eine standardisierte Innenschale bereitgestellt werden, die marktübergreifend gleichbleibend eine kontinuierliche Wanddicke aufweist. Es versteht sich jedoch, dass nach einer alternativen oder ergänzenden Ausführungsform der vorliegenden Erfindung auch die Innenschale mit variabler Wanddicke über dessen Längserstreckung ausgebildet sein kann. Auf diese Weise können gegebenenfalls zusätzlich zur Außenschale gezielt Teilbereiche der B-Säule verstärkt werden.

Insbesondere kann zwischen dem wenigstens einen Schweißabschnitt des unteren Formteils und dem einlagigen Flanschabschnitt der Innenschale ein Winkel von 1°bis 90° eingeschlossen sein. Mit andere Worten kann der Schweißabschnitt des unteren Formteils schräg oder senkrecht auf der Innenschale angeordnet sein. Auf diese Weise kommen die beiden Bauteile zumindest im Bereich des Schweißabschnitts nur entlang der Verbindungskante miteinander in Anlage. Somit kann ein besonders schmaler Schweißabschnitt bereitgestellt werden, wodurch ein leichteres unteres Formteil und im Ergebnis eine leichtere B-Säule bereitgestellt wird. Zudem ist vorteilhaft, dass durch die schräge Anordnung des Schweißabschnitts auf der Innenschale hinter der Schweißnaht ein sich nach innen öffnender Raum gebildet ist, der zur Entgasung eines während des Hochenergiestrahl-Schweißvorgangs abströmenden Metalldampfs dienen kann.

Die Innenschale kann ein kaltumgeformtes Bauteil aus einem metallischen Material, das vorzugsweise aus einem Stahlblech hergestellt ist, sein. Unter Kaltumformung wird das Umformen von Metall bei einer Temperatur deutlich unterhalb deren Rekristallisationstemperatur verstanden. Als Stahlwerkstoff kann beispielsweise ein kaltgewalztes, mikrolegiertes Stahlblech, beispielsweise HC420LA+ verwendet werden. Das Stahlblech kann mit einer Zinkbeschichtung, beispielsweise ZE75/75, versehen werden.

Das untere Formteil der hybriden Außenschale kann ein warmumgeformtes und gehärtetes Bauteil aus einem metallischen Material sein, das vorzugsweise aus einem Stahlblech hergestellt ist. Unter Warmumformung wird das Umformen von Metallen oberhalb deren Rekristallisationstemperatur verstanden. Das untere Formteil kann zudem gehärtet sein. Als Stahlwerkstoff kann beispielsweise Borstahl, insbesondere 22MnB5, verwendet werden, wobei jeder andere härtbare Stahlwerkstoff ebenso denkbar ist. Das untere Formteil kann beschichtet sein, insbesondere mit einer Aluminium-Silizium-Legierung oder Zink, um eine Verzunderung des Bauteils während der Warmumformung zu vermeiden beziehungsweise als Korrosionsschutz für das untere Formteil zu dienen. Dabei kann das untere Formteil vor und/oder nach der Warmumformung beschichtet werden. Bei Beschichtung vor der Warmumformung kann zum einen das Bandmaterial, aus dem das untere Formteil erzeugt sein kann, oder zum anderen die Platine selbst beschichtet werden. Bei Beschichtung nach der Warmumformung kann das umgeformte und mitunter bereits gehärtete untere Formteil beschichtet werden.

Das untere Formteil kann entweder nach der Warmumformung oder zusammen mit der Warmumformung zumindest in Teilbereichen, vorzugsweise vollständig, gehärtet werden. Das Warmumformen und Härten kann in einem Prozess in einem Presshärtewerkzeug durchgeführt werden. Dieser kombinierte Umform- und Härteprozess wird auch als Presshärten bezeichnet. Beispielsweise kann das untere Formteil aus einer Platine hergestellt sein, die vor dem Warmumformen auf mindestens 800 bis 850 Grad Celsius erwärmt, dann in ein Umformwerkzeug eingelegt und im warmen Zustand umgeformt und dabei durch Kontaktierung mit dem Umformwerkzeug schnell abgekühlt wird. Das Umformwerkzeug kann von innen her zwangsgekühlt werden. Das Abkühlen des unteren Formteils im Umformwerkzeug kann beispielsweise innerhalb von etwa 15 Sekunden oder weniger auf beispielsweise etwa 200 Grad Celsius erfolgen. Neben der vorbeschriebenen Presshärtung kann das untere Formteil auch auf andere Weise gehärtet werden. Nach einer möglichen Ausgestaltung kann das gehärtete untere Formteil auch lokale Weichzonen aufweisen, die im Crashfall insbesondere als Soll-Deformationszonen dienen können. Die mechanischen Eigenschaften der Weichzonen können entsprechend den Anforderungen ausgelegt werden. Beispielsweise können Weichzonen, die als Versagensbereiche vorgesehen sind, eine deutlich höhere Bruchdehnung aufweisen als die Bruchdehnung des gehärteten Grundmaterials. Vorzugsweise beträgt die Bruchdehnung in den Weichzonen mehr als 10 %, insbesondere 10 % bis 15 %. Demgegenüber kann die Bruchdehnung des gehärteten Grundmaterials des unteren Formteils beispielsweise bei etwa 4 % bis 7 % liegen.

Das obere Formteil der hybriden Außenschale kann ein kohlenstofffaserverstärktes Kunststoffteil (CFK) sein. Neben CFK kann das obere Formteil auch aus einem glasfaserverstärkten Kunststoff (GFK) oder einem Faserverbundwerkstoff mit anderen höherfesten Fasermaterialien hergestellt sein. Das obere Formteil kann ebenfalls unterschiedliche Wandstärken aufweisen.

Eine weitere Lösung der oben genannten Aufgabe besteht in einem Verfahren zum Herstellen einer B-Säule für eine Kraftfahrzeugkarosserie mit folgenden Schritten:
Bereitstellen einer Innenschale aus Blechmaterial; Bereitstellen eines unteren Formteils aus Blechmaterial; Bereitstellen eines oberen Formteils aus faserverstärktem Kunststoff; Verbinden des unteren Formteils mit der Innenschale; Aufsetzen des oberen Formteils auf das untere Formteil und die Innenschale derart, dass die beiden Formteile nur entlang eines Überlappungsbereiches einander überlappen, wobei das untere Formteil das obere Formteil über den Überlappungsbereich hinaus in einer ersten Längserstreckungsrichtung der B-Säule überragt und das obere Formteil das untere Formteil über den Überlappungsbereich hinaus in einer zweiten Längserstreckungsrichtung der B-Säule überragt, und Verbinden des oberen Formteils mit dem unteren Formteil im Überlappungsbereich.

Durch das erfindungsgemäße Verfahren zum Herstellen der B-Säule ergeben sich dieselben Vorteile, wie sie im Zusammenhang mit der erfindungsgemäßen B-Säule beschrieben worden sind, sodass hier abkürzend auf obige Beschreibungen Bezug genommen wird. Dabei versteht es sich, dass alle genannten Ausgestaltungen der Vorrichtung auf das Verfahren übertragbar sind und umgekehrt. Insgesamt ist die erfindungsgemäße B-Säule bauteilreduziert und weiter gewichtsreduziert, weist eine hohe Steifigkeit auf und kann anspruchsvolle Crash-Lastfälle erfüllen.

Vorteilhafterweise wird das untere Formteil mit der Innenschale verschweißt, insbesondere mittels eines Hochenergiestrahl-Schweißverfahren, das im Vergleich zu anderen Schweißverfahren die thermische Energie geringer und konzentrierter in die zu fügenden Bauteile einträgt. Somit ist ein thermisch bedingter Verzug verglichen mit Widerstandspunktschweißen deutlich geringer, wobei Widerstandsschweißen ebenso denkbar ist. Zudem wird beim Hochenergiestrahlschweißverfahren lediglich ein einseitiger Zugang zu den miteinander zu verschweißenden Bauteilen benötigt. Dagegen muss bei einem Widerstandspunkt-Schweißverfahren der Zugang von zwei Seiten gegeben sein, um die Schweißelektroden beidseitig an die Innenschale und das untere Formteile heranführen zu können. Durch den Versatz der Verbindungskante des unteren Formteils gegenüber der Außenkante der Innenschale ist die Verbindungskante zudem seitlich gut erreichbar beziehungsweise einsehbar, wodurch der Einsatz von Hochenergiestrahl-Schweißverfahren vereinfacht wird. Als Hochenergiestrahl-Schweißverfahren eignet sich neben dem Lichtbogen- und Elektronenstrahl-Schweißverfahren vor allem das Laserstrahl-Schweißverfahren, wobei das gewählte Schweißverfahren mit oder ohne Zusatzmaterial durchgeführt werden kann.

Um eine besonderes stabile Verbindung zwischen dem unteren Formteil und der Innenschale herzustellen, kann die Hochenergiestrahlschweißnaht über zumindest 50 % einer Kantenlänge der Verbindungskante erzeugt werden. Dabei kann eine durchgängige oder unterbrochene Bahn geschweißt werden. Die Schweißnaht, welche der Belastung der Innenschale und dem unteren Formteil angepasst werden kann, ist stabiler als herkömmliche widerstandgeschweißte Punkte. Vorteilhafterweise wird die Hochenergiestrahlschweißnaht durchgehend über zumindest 50 % der Länge der Verbindungskante ausgebildet.

Nach einer bevorzugten Möglichkeit wird zunächst das untere Formteil zeitlich vor dem oberen Formteil auf die Innenschale aufgesetzt und mit der Innenschale verbunden. Anschließend wird das obere Formteil aufgesetzt, wobei das obere Formteil das untere Formteil im Überlappungsbereich überlappt und oberhalb des Überlappungsbereiches auf der Innenschale aufliegt. Weiterhin kann vorgesehen sein, dass das obere Formteil im Überlappungsbereich zumindest abschnittsweise formschlüssig mit dem unteren Formteil verbunden wird.

Bevorzugte Ausführungsbeispiele werden nachstehend anhand der Zeichnungsfiguren erläutert. Hierin zeigt:
- Figur 1: eine B-Säule gemäß einer Ausführungsform in Seitenansicht;
- Figur 2: die B-Säule in Explosionsansicht;
- Figur 3: die B-Säule in schematischer Querschnittsansicht entlang der in Figur 1 gezeigten Schnittlinie III-III;
- Figur 4: eine vergrößerte Detailansicht der in Figur 3 gezeigten B-Säule;
- Figur 5: die B-Säule in schematischer Querschnittsansicht entlang der in Figur 1 gezeigten Schnittlinie III-III mit einer zur Figur 3 alternativen Außenschale;
- Figur 6: eine vergrößerte Detailansicht der in Figur 5 gezeigten B-Säule;
- Figur 7: die B-Säule in schematischer Querschnittsansicht entlang der in Figur 1 gezeigten Schnittlinie VII-VII;
- Figur 8: die B-Säule in schematischer Querschnittsansicht entlang der in Figur 1 gezeigten Schnittlinie VIII-VIII;
- Figur 9: die Außenschale in schematischer Querschnittsansicht entlang der in Figur 1 gezeigten Schnittlinie VIII-VIII mit einer zur Figur 8 alternativen Außenschale; und
- Figur 10: die B-Säule in schematischer Querschnittsansicht entlang der in Figur 1 gezeigten Schnittlinie VIII-VIII mit einer zur Figur 8 weiteren alternativen Außenschale.

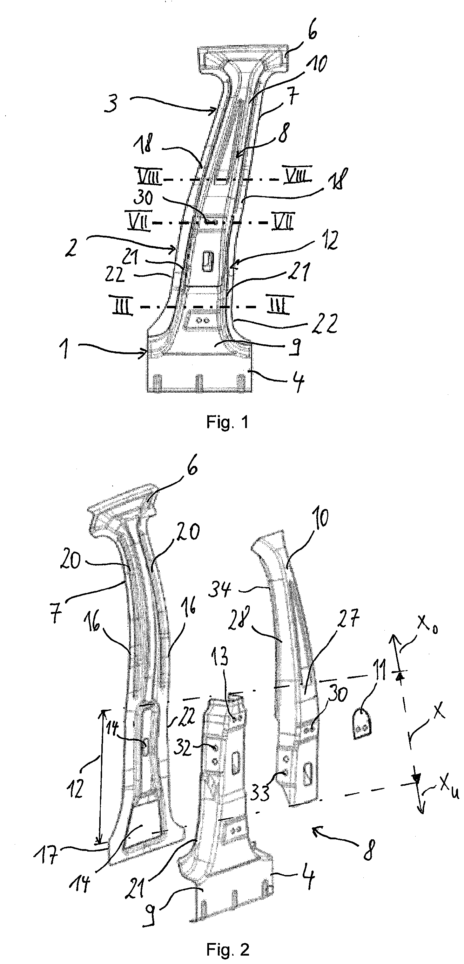

In Figur 1 ist eine Fahrzeugsäule einer Kraftfahrzeugkarosserie in Form einer B-Säule dargestellt. Die B-Säule hat eine längliche, hohle Grundstruktur, die im eingebauten Zustand der B-Säule an der Karosserie des Kraftfahrzeuges von unten nach oben erstreckt und in einen Fußbereich 1, einen mittleren Bereich 2 und einen Kopfbereich 3 unterteilt werden kann.

Die B-Säule kann, beginnend von unten nach oben, im eingebauten Zustand mit deren Fußbereich 1 an einem nicht gezeigten Karosserieunterbau angebunden sein. Hierzu kann die B-Säule einen unteren Flanschabschnitt 4 aufweisen, der beispielsweise T-förmig ausgebildet sein kann und gegen eine nicht gezeigte Schwellerstruktur des Kraftfahrzeugunterbaus fixierbar ist.

Im mittleren Bereich 2 der B-Säule können im eingebauten Zustand der B-Säule an der Kraftfahrzeugkarosserie Funktionsteile 5, wie beispielsweise eine Aufnahme oder eine Anbindungsstelle für ein Schließkeil für die Vordertüre, ein Türschloss, ein Türscharnier oder ein hinterer Türfeststeller, gehalten sein.

Über den Kopfbereich 3 kann die B-Säule im eingebauten Zustand an einen nicht gezeigten Dachbereich der Karosserie angebunden sein. Hierzu kann die B-Säule einen oberen Flanschabschnitt 6 aufweisen, der beispielsweise T-förmig ausgebildet sein kann und zur Anbindung der B-Säule an den Dachbereich der Kraftfahrzeugkarosserie dient.

Wie aus Figur 2 ersichtlich ist, weist die B-Säule eine Innenschale 7, die im eingebauten Zustand an der Karosserie einem Fahrzeuginnenraum zugewandt ist, eine vom Fahrzeuginnenraum abgewandte mehrteilige Außenschale 8, die ein unteres Formteil 9 und ein oberes Formteil 10 umfasst, und ein Verstärkungselement 11 auf.

Die Innenschale 7 kann ein kaltumgeformtes Bauteil aus Stahlblech sein, das eine gleichbleibende Wanddicke in Längs- und Querrichtung aufweist. Grundsätzlich kann die Innenschale 7 je nach Anforderung an die B-Säule auch unterschiedliche Wanddicken in Längs- und/oder Querrichtung aufweisen. Als Stahlwerkstoff kann beispielsweise ein kaltgewalztes, mikrolegiertes Stahlblech, zum Beispiel HC 420 LA+, vorgesehen werden, das vor der Kaltumformung mit einer beidseitigen Zinkbeschichtung versehen werden kann. Aus diesem beschichteten Bandmaterial kann in an sich bekannter Weise eine Platine herausgearbeitet, die anschließend zur Innenschale 7 kaltumgeformt wird. Unter Kaltumformung wird das Umformen von Metallen bei einer Temperatur deutlich unterhalb der Rekristallisationstemperatur des hier verwendeten Stahlblechs, zum Beispiel bei Raumtemperatur, verstanden.

Die mehrteilige Außenschale 8 ist funktional durch das untere Formteil 9 und das obere Formteil 10 gebildet, die nur entlang eines Überlappungsbereiches 12 einander überlappend angeordnet und miteinander verbunden sind. Mit anderen Worten sind das untere Formteil 9 und das obere Formteil 10 versetzt zueinander angeordnet, wobei sich die beiden Formteile 9, 10 in dem Überlappungsbereich 12 überlappen, respektive übereinander angeordnet sind. Dabei überragt das untere Formteil 9 das obere Formteil 10 über den Überlappungsbereich 12 hinaus nach unten, das heißt in einer ersten Längserstreckungsrichtung Xᵤ der B-Säule. Dagegen überragt das obere Formteil 10 das untere Formteil 9 über den Überlappungsbereich 12 hinaus in einer zur ersten Längserstreckungsrichtung Xᵤ entgegengesetzten Richtung nach oben, das heißt in einer zweiten Längserstreckungsrichtung Xₒ der B-Säule. Sowohl die erste als auch die zweite Längserstreckungsrichtung Xᵤ, Xₒ sind als Vektoren zu verstehen, die in entgegengesetzte Richtungen zeigen und parallel zueinander ausgerichtet sind. Im Weiteren wird vereinfacht auf die Längsrichtung X Bezug genommen, wenn nicht die Richtungsangabe nach oben beziehungsweise nach unten hervorgehoben werden soll.

Unter Vernachlässigung des Einflusses der Innenschale 7 ist somit der Fußbereich 1 allein durch das untere Formteil 9 und der Kopfbereich 3 allein durch das obere Formteil 10 bestimmt. Somit liegt nur im Überlappungsbereich 12 eine Materialdoppelung vor, wobei das untere Formteil 9 aus Blechmaterial und das obere Formteil 10 aus faserverstärktem Kunststoff hergestellt. Insofern ist die Außenschale ein Hybridbauteil, die im Überlappungsbereich 12 verstärkt ausgebildet ist.

Das untere Formteil 9 kann ein warmumgeformtes und gehärtetes Formteil sein. Zur Herstellung des unteren Formteils 9 kann zunächst ein Bandmaterial, hier beispielsweise ein 22MnB5 Stahlblech, mit einer Aluminium-Silizium-Beschichtung versehen und flexibel gewalzt werden. Das flexibel gewalzte Stahlblech wird auch als Tailor Rolled Blank bezeichnet. Aus diesem beschichteten Bandmaterial wird eine Platine herausgearbeitet, sodass die Platine eine variable Wanddicke über deren Längserstreckung und insbesondere eine konstante Wanddicke über deren Quererstreckung aufweist. Vor einer Warmumformung der Platine werden Durchgangsöffnungen 13 für die Funktionsteile, wie beispielsweise eine Aufnahme oder eine Anbindungsstelle für ein Schließkeil für die Vordertüre, ein Türschloss, ein Türscharnier oder ein hinterer Türfeststeller, und weitere notwendige Öffnungen in die Platine eingebracht. Grundsätzlich können die Durchgangsöffnungen 13 auch in das warmumgeformte und gehärtete untere Formteil 9 mittels eines Laserstrahl-Schneidverfahrens eingebracht werden. Anschließend wird die Platine warmumgeformt, wobei unter Warmumformung das Umformen von Metallen oberhalb der Rekristallisationstemperatur des hier verwendeten 22MnB5 Stahls verstanden wird. Bei Bedarf können in dem gehärteten unteren Formteil 9 lokale Weichzonen vorgesehen werden. Solche Weichzonen können beispielsweise im Hauptversagensbereich der B-Säule, das heißt im Bereich der Aufnahme und des Abbaus von Crashenergie vorgesehen sein. Dabei werden die Weichzonen hinsichtlich ihrer Materialeigenschaften an die entsprechenden Anforderungen eingestellt, beispielsweise auf eine besonders hohe Bruchdehnung.

Das obere Formteil 10 ist aus einem Faserverbundwerkstoff mit höherfesten Fasermaterialien, beispielsweise aus kohlenstofffaserverstärktem Kunststoff (CFK) oder glasfaserverstärktem Kunststoff (GFK), hergestellt. Die einzelnen Fasern des Faserverbundwerkstoffes können beispielsweise als Gelege, in denen die Fasern ideal parallel und gestreckt sind, oder als Multiaxialgelege, in denen die Fasern nicht ausschließlich in einer Laminatebene, sondern zusätzliche Fasern senkrecht zur Laminatebene orientiert sind, oder als Gesticke zur gezielten lokalen Verstärkung einzelner Bereiche des oberen Formteils 10 angeordnet sein. Das obere Formteil 10 kann unterschiedliche Wanddicken in Längs- und/oder Querrichtung des oberen Formteils 10 aufweisen.

Im Weiteren wird der konkrete Aufbau der B-Säule beschrieben. Die Innenschale 7 weist eine zumindest etwa flächige und längliche Grundform auf, in die mehrere Aussparungen 14 eingebracht wurden, die beispielsweise zur Durchführung elektrischer Kabel oder anderer Fahrzeugkomponenten dienen. In einem oberen Endbereich der Innenschale 7 ist der obere Flanschabschnitt 6 zur Anbindung der B-Säule an den Dachbereich ausgebildet.

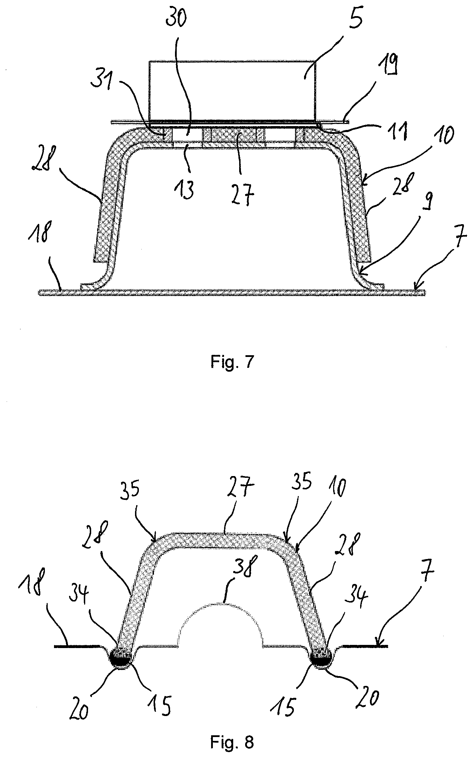

Randseitig verlaufen im Wesentlichen in der Längsrichtung X der B-Säule zwei seitliche Stützbereiche 16, die flanschartig ausgebildet sind. Die Stützbereiche 16 erstrecken sich ausgehend vom oberen Flanschabschnitt 6 über den mittleren Bereich 2 der B-Säule in einen unteren Endbereich 17 der Innenschale 7 und folgen zumindest etwa dem leicht gebogenen Verlauf der B-Säule. Dabei dienen die in Querrichtung der B-Säule innenliegenden Abschnitte der Stützbereiche 16 zum Verbinden der Innenschale 7 mit der Außenschale 8. Wogegen außenliegende Flanschabschnitte 18 der flanschartigen Stützbereiche 16 zum Anbinden weiterer Fahrzeugkomponenten, beispielsweise einer in Figur 7 vereinfacht dargestellter Fahrzeug-Außenhaut 19, an die B-Säule im eingebauten Zustand dienen. Die flanschartigen Stützbereiche 16 der B-Säule weisen im Kopfbereich 3 der B-Säule Nuten 20 auf, die sich zumindest im Wesentlichen in der Längsrichtung X der B-Säule erstrecken und/oder zumindest etwa dem leicht gebogenen Verlauf der B-Säule folgen. Die Nuten 20 dienen zum Verbinden der Innenschale 7 mit dem oberen Formteil 10 der Außenschale 8.

Im Fußbereich 1 und im mittleren Bereich 2 der B-Säule sind die Innenschale 7 und das untere Formteil 9 der Außenschale 8 zumindest stoffschlüssig miteinander verbunden. In Figur 1 und 2 ist erkennbar, dass das untere Formteil 9 der Außenschale 8 eine etwa T-förmige Grundform aufweist. In einem unteren Endbereich des unteren Formteils 9 ist der untere Flanschabschnitt 4 zur Anbindung der B-Säule an den Karosserieunterbau ausgebildet.

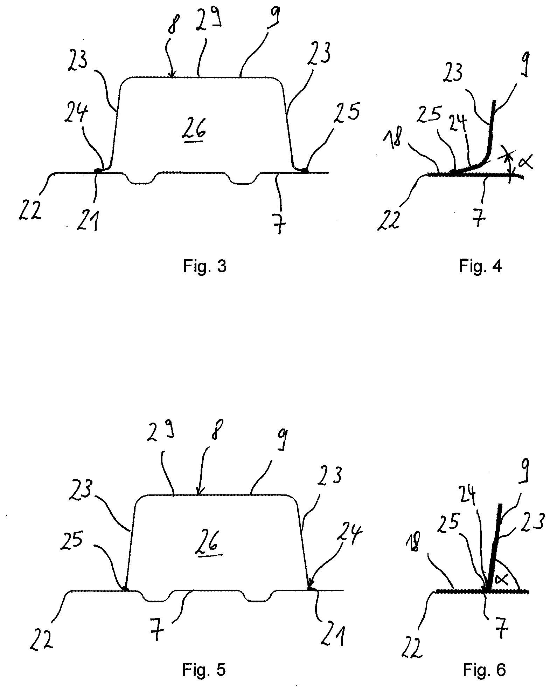

In Figur 3 ist ein Querschnitt der B-Säule entlang der in Figur 1 gezeigten Schnittlinie III-III gezeigt. Erkennbar ist, dass das untere Formteil 9 oberhalb des unteren Flanschabschnittes 4 einen U-förmigen beziehungsweise hutprofilförmigen Querschnitt aufweist. Dabei sind Verbindungskanten 21 des unteren Formteils 9 gegenüber Außenkanten 22 der Innenschale 7 versetzt, sodass die Innenschale 7 in den außenliegenden Flanschabschnitten 18 der Stützbereiche 16 einlagige Flanschabschnitte der B-Säule bildet. Konkret stützt sich das hutprofilförmige untere Formteil 9 an seinen Seitenwandungen 23 mit zwei abgebogenen Schweißabschnitten 24, die durch Beschneiden der bei der Warmumformung der Platine für das untere Formteil 9 entstandenen Einziehflansche hergestellt sein können, an der Innenschale 7 ab.

In der vergrößerten Teildarstellung in Figur 4 ist erkennbar, dass durch die schräge Anstellung der beiden Schweißabschnitte 24 zur Innenschale 7 das untere Formteil 9 nur entlang der zwei sich im Wesentlichen in der Längsrichtung X erstreckenden Verbindungskanten 21 mit der Innenschale 7 in Anlage ist. Die Verbindungskanten 21 sind gegenüber den Außenkanten 22 der Innenschale 7 zurückgestellt, wodurch die Flanschabschnitte 18 der flanschartigen Stützbereiche 16 der Innenschale 7 freigelegt, respektive nicht von der Außenschale 8 überdeckt sind. Somit ist die B-Säule entlang der außenliegenden Flanschabschnitte 18 der Stützbereiche 16 im Fußbereich 1 und im mittleren Bereich 2 der B-Säule einlagig ausgebildet, wie dies insbesondere in den Figuren 3 bis 7 gezeigt ist. Um die B-Säule an die weiteren Fahrzeugkomponenten, beispielsweise die Außenhaut 19, an das Dach oder an Glasflächen, anzufügen, muss somit nur die Innenschale 7 entlang der einlagigen Flanschabschnitte 18 mit der Außenhaut 19 oder den weiteren Fahrzeugkomponenten gefügt oder anderweitig befestigt werden. Dies kann beispielsweise durch Schweißen oder Kleben erfolgen.

Die Innenschale 7 und das untere Formteil 9 sind entlang der beiden Verbindungskanten 21 des unteren Formteils 9 mittels eines Laserstrahl-Schweißverfahrens mit jeweils einer durchgehenden Hochenergieschweißnaht 25, kurz die Schweißnaht, verbunden. Die Schweißnaht 25 kann sich über die gesamte Kantenlänge der jeweiligen Verbindungskante 21 erstrecken. Durch die schräge Anordnung der beiden Schweißabschnitte 24 auf der Innenschale 7 ist zwischen dem unteren Formteil 9 und der Innenschale 7 ein Anstellwinkel a von beispielsweise etwa 15° eingeschlossen, sodass ein sich ins Innere der B-Säule öffnender Innenraum 26 gebildet ist. Dabei dient der Innenraum 26 zur Entgasung von beim Schweißvorgang entstehenden Metalldämpfen. Die Metalldämpfe können zu diesem Zeitpunkt, in dem das obere Formteil 10 noch nicht angesetzt ist, am oberen und unteren Endbereich des unteren Formteils 9 entweichen.

Ein Vorteil ist, dass sich die Innenschale 7 und das untere Formteil 9 durch die schmalen Schweißabschnitte 24 lediglich geringfügig überlappen, sodass die unterschiedlichen Wanddicken des unteren Formteils 9 nicht mit der Blechdicke der Innenschale 7 übereinstimmen müssen. Dadurch wird zum einen der Planungs- und Herstellungsprozess für die B-Säule und zum anderen der Schweißvorgang vereinfacht. Somit kann die Innenschale 7 ein standardisiertes Schließblech sein, das marktübergreifend einheitlich eine Blechdicke aufweist. Dann ist lediglich das untere Formteil 9 an anwendungs- oder marktspezifische Vorgaben hinsichtlich des Crashschutzes anzupassen, indem bestimmte Teilbereiche des unteren Formteils 9 durch eine Erhöhung oder Verringerung der Blechdicke gezielt verstärkt oder weicher ausgebildet werden.

In Figur 5 beziehungsweise Figur 6 ist ein alternativer Querschnitt der B-Säule dargestellt. Hier wurden im Unterschied zu der in den Figuren 3 und 4 gezeigten Ausführungsform die beim Schritt der Warmumformung des unteren Formteils 9 üblicherweise anfallenden Einziehflansche nach der Presshärtung vollständig abgeschnitten. Auf diese Weise erhält das untere Formteil 9 im Querschnitt eine U-förmige Grundform, wobei die zwei Schweißabschnitte 24 an den äußeren Randbereichen der Seitenwandungen 23 gebildet sind. In Figur 6 ist erkennbar, dass sich die Breite der Schweißabschnitte 24 auf die Breite der Schweißnähte 25 beschränken, sodass die Breite der Schweißabschnitte 24 weniger als 2 Millimeter betragen kann. Das untere Formteil 9 ist somit gegenüber der Innenschale 7 im Stoß mit einem Anstellwinkel a von etwa 80° angeordnet und ist entlang der beiden Verbindungskanten 21 mit der Innenschale 7 mittels des Laserstrahl-Schweißverfahrens gefügt. Durch diese schräge Anordnung dient wiederum der sich ins Innere der B-Säule öffnende Innenraum 26 zur Entgasung von beim Schweißvorgang entstehenden Metalldämpfen.

Im Überlappungsbereich 12 ist das obere Formteil 10 von außen auf das untere Formteil 9, das wie vorstehend beschrieben mit der Innenschale 7 zumindest stoffschlüssig verbunden ist, formschlüssig aufgesetzt sowie stoff- und kraftschlüssig mit dem unteren Formteil 9 verbunden.

Das obere Formteil 10 weist eine längliche Grundform mit einem U-förmigen Querschnitt auf. Konkret weist das obere Formteil 10 eine Außenwandung 27 und zwei Seitenwandungen 28 auf, die, wie in Figur 7 gezeigt, von der Innenschale 7 beabstandet sind. Das obere Formteil 10 liegt im Überlappungsbereich 12 flächig auf der Außenseite des unteren Formteils 9 an. Zwischen dem oberen Formteil 10 und dem unteren Formteil 9 kann eine hier nicht gezeigte Sperrschicht zur Vermeidung einer Kontaktkorrosion angeordnet sein.

Aus Figur 2 ist ersichtlich, dass die Längserstreckung des Überlappungsbereiches 12 etwa 50 % bis 60 % der Längserstreckung des unteren Formteils 9 und etwa 35 % bis 45 % der Längserstreckung des oberen Formteils 10 beträgt. Da eine Fahrzeugkarosserie zum Schutz der Insassen gerade im mittleren Bereich 2 der B-Säule üblicherweise steif ausgelegt wird, kann der Überlappungsbereich 12 zweckmäßigerweise im mittleren Bereich 2 der B-Säule gebildet sein. Prinzipiell möglich und denkbar ist aber auch, dass je nach Anforderung an die Fahrzeugkarosserie der Überlappungsbereich 12 im Fuß- oder Kopfbereich 1, 3 der B-Säule gebildet ist und/oder sich über mehrere Bereiche 1, 2, 3 der B-Säule erstreckt.

Neben dem beschriebenen Formschluss sind das untere Formteil 9 und das obere Formteil 10 auch stoff- und kraftschlüssig miteinander verbunden. Zur Herstellung des Stoffschlusses sind die beiden Formteile 9, 10 im Überlappungsbereich 12 miteinander verklebt. In Figur 7 ist erkennbar, dass das untere Formteil 9 und das obere Formteil 10 im Überlappungsbereich 12 durch nicht gezeigte Befestigungsmittel, beispielsweise Schrauben oder Nieten, kraftschlüssig miteinander verbunden sind. Die Befestigungsmittel sind zum Anbringen der Funktionsteile 5, wie beispielsweise eine Aufnahme oder eine Anbindungsstelle für ein Schließkeil für die Vordertüre, ein Türschloss, ein Türscharnier oder ein hinterer Türfeststeller, ausgebildet.

Zur Aufnahme der Befestigungsmittel weisen das obere Formteil 10 und das untere Formteil 9 in deren Außenwandungen 27, 29 übereinander angeordnete und deckende Durchgangsöffnungen 30, 13 auf. Weiterhin sind in den Durchgangsöffnungen 30 des oberen Formteils 10 Hülsen 31 eingesetzt, um eine Kontaktkorrosion zwischen den Befestigungsmitteln und dem oberen Formteil 10 zu vermeiden. Die Hülsen 31 können beispielsweise lackiert oder aus Titan oder einem anderen korrosionsbeständigen Material hergestellt sein. Weiterhin kann im Überlappungsbereich 12 auf der von der Innenschale 7 abgewandten Außenfläche des oberen Formteils 10 das Verstärkungselement 11 aus Blechmaterial zur Abstützung der Befestigungsmittel angeordnet sein. Dadurch wird verhindert, dass beim Eintrag einer Crashenergie, beispielsweise bei einem Seitenaufprall, die Befestigungsmittel durch die Außenhaut 19 und das aus faserverstärktem Kunststoff hergestellte obere Formteil 10 gedrückt werden und dieses quasi ausstanzen. Das Verstärkungselement 11 kann in Form eines Blechstückes, welches auch als Patch bezeichnet werden kann, ausgebildet sein. Hierzu kann das Verstärkungselement 11 aus einem Metallblech, insbesondere einem Stahlblech hergestellt sein. Zwischen dem Verstärkungselement 11 und dem oberen Formteil 10 kann ebenfalls eine nicht gezeigte Sperrschicht zur Vermeidung einer Kontaktkorrosion vorgesehen sein. Darüber hinaus können das untere Formteil 9 und das obere Formteil 10 im Überlappungsbereich 12 auch in deren Seitenwandungen 23, 28 Durchgangsöffnungen 32, 33 zur Aufnahme weiterer Befestigungsmittel aufweisen, durch die die beiden Formteile 9, 10 ebenfalls kraftschlüssig miteinander verbunden werden können.

In Figur 8 ist ein Querschnitt der B-Säule entlang der in Figur 1 gezeigten Schnittlinie XIII-XIII gezeigt, der im Kopfbereich 3 der B-Säule liegt. Erkennbar ist, dass oberhalb des Überlappungsbereiches 12 das obere Formteil 10 direkt mit der Innenschale 7 formschlüssig verbunden ist. Das obere Formteils 10 kann am oberen Flanschabschnitt 6, beispielsweise durch nicht näher gezeigte Nietverbindungen, und am mittleren Bereich 2, beispielsweise durch Nietverbindungen, mit denen die Funktionsteile 5 an der B-Säule befestigt sind, sowie mittels der Verbindung mit dem unteren Formteil 9 an der Innenschale 7 befestigt sein. Weiterhin kann, wie hier gezeigt, das obere Formteil 10 stoffschlüssig mit der Innenschale 7 verbunden sein. An den Randbereichen der Seitenwandungen 28 des oberen Formteils 10 sind Verbindungsabschnitte 34 gebildet, die in die Nuten 20 der Innenschale 7 formschlüssig eingreifen. Zur Herstellung des Stoffschlusses sind die Verbindungsabschnitte 34 in den Nuten 20 mittels Klebstoffraupen 15 mit der Innenschale 7 verklebt. Auf diese Weise ist das obere Formteil 10 im Kopfbereich 3 der B-Säule an der Innenschale 7 fixiert.

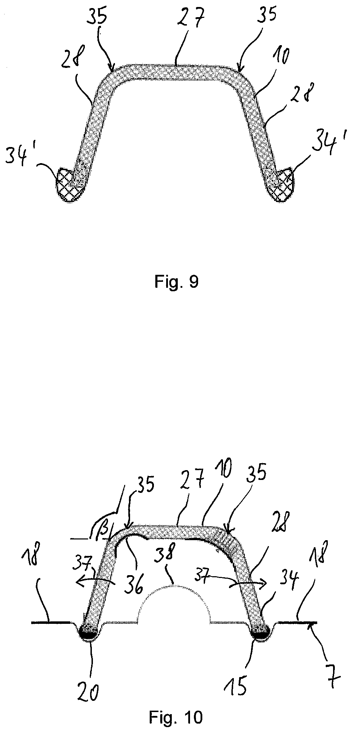

In Figur 9 ist gezeigt, dass die Verbindungsabschnitte 34' des oberen Formteils 10 auch in Form von umgebogenen Randbereichen des oberen Formteils 10 gebildet sein können. Durch die umgelegten, respektive umgebogenen Randbereiche, die die Verbindungsabschnitte 34' des oberen Formteils 10 bilden, wird der mit Zugspannungen belastete Randbereich des oberen Formteils 10 verstärkt und die Kerbempfindlichkeit reduziert.

Weiterhin ist in Figuren 8 bis 10 erkennbar, dass zwischen den Seitenwandungen 28 und der Außenwandung 27 des oberen Formteils 10 jeweils Winkel β von etwa 110° eingeschlossen ist. Auf diese Weise kann die Außenwandung 27 des oberen Formteils 10 bei einer von au ßen auf die Außenschale 8 einwirkenden Kraft, insbesondere einem Eintrag einer Crashenergie in einem Crashfall, bis zu 10% des bauseitig festgelegten Abstandes der Außenwandung 27 zur Innenschale 7 in Richtung der Innenschale 7 elastisch federn. Dadurch ist die B-Säule im Kopfbereich 3 somit federartig ausgebildet und weist eine im elastischen Bereich deformierbare Grundform auf.

Damit die Federeigenschaft des oberen Formteil 10 bei einem Eintrag einer Crashenergie verbessert ist, das heißt das obere Formteil 10 mehr Energie aufnehmen kann, ist in Figur 8 erkennbar, dass die Innenschale 7 einen materialgeschwächten Abschnitt 38 aufweist, der zwischen den Seitenwandungen 28 des oberen Formteils 10 angeordnet ist. Der materialgeschwächte Abschnitt 38 erstreckt sich oberhalb des Überlappungsbereiches 12 in der zweiten Längserstreckungsrichtung der B-Säule. Dadurch können sich beim Seitenaufprall die in die Nuten 20 der Innenschale 7 eingreifenden Seitenwandungen 28 des zumindest abschnittsweise U-förmigen oberen Formteils 10 relativ zur Innenschale 7 aufstellen, das heißt den Abstand zwischen den freien Längsenden der Seitenwandungen 28 verringern. Wenn die einwirkende Crashenergie unterhalb der Bruchkraft des oberen Formteils 10 bleibt, können sich die Seitenwandungen 28 des oberen Formteils 10 nach Entlastung wieder nach außen bewegen, das heißt der Abstand zwischen den freien Längsenden der Seitenwandungen 28 vergrößert sich wieder. Auf diese Weise kann das obere Formteil 10 atmen, ohne zu brechen. Die Innenschale 7 wird dann entlang des materialgeschwächten Abschnitts 38 durch die sich nach außen bewegenden freien Längsenden, die in die Nuten 20 der Innenschale 7 eingreifen, wieder auseinandergezogen und das obere Formteil 10 gibt die aufgenommene Energie wieder ab.

Aus den Figuren 8 und 10 ist weiter ersichtlich, das die außenliegenden Flanschbereiche 18 der Innenschale 7, analog zum Fußbereich 1 und zum mittleren Bereich 2 der B-Säule, einlagig ausgebildet sind, um die weiteren Fahrzeugkomponenten, beispielsweise die Außenhaut 19, Glasflächen oder das Dach, auf einfache Weise anzufügen.

In Figur 10 ist eine weitere mögliche Ausgestaltung der B-Säule anhand eines Querschnitts durch die B-Säule entlang der in Figur 1 gezeigten Schnittlinie XIII-XIII gezeigt. Erkennbar ist, dass zur Beeinflussung des Crashverhaltens der B-Säule im Kopfbereich 3 das obere Formteil 10 in Übergangsbereichen 35 zwischen der Außenwandung 27 und den Seitenwandungen 28 jeweils eine gelenkartige Materialschwächung in Form einer Kerbe 36 aufweist, die zur Verdeutlichung der Unterschiede nur in dem mit Blick auf Figur 10 linken Übergangsbereich 35 dargestellt ist. Durch die gezielt in beiden Übergangsbereichen 35 eingebrachte Schwächung des oberen Formteils 10 kann das Federverhalten der B-Säule bei einer von außen auf die B-Säule einwirkenden Kraft getrimmt werden. Beim Seitenaufprall kann somit die Außenwandung 27 des oberen Formteils 10 in Richtung der Innenschale 7 gedrückt werden, wobei die Seitenwandungen 28 nachgeben können, indem sie sich relativ zur Innenschale 7 in Richtung der Pfeile 37 aufstellen.

Die Materialschwächung, hier in Form der Kerbe 36, kann, wie in Figur 10 gezeigt, sowohl mit den gerade ausgebildeten Verbindungsabschnitten 34 gemäß Figur 8 als auch mit den in Figur 9 gezeigten umgebogenen Verbindungsabschnitten 34' kombiniert werden.

Weiterhin ist in Figur 10 erkennbar, dass ein materialgeschwächter Abschnitt 38 vorgesehen sein kann, der zwischen den Seitenwandungen 28 des oberen Formteils 10 angeordnet ist und sich oberhalb des Überlappungsbereiches 12 in der zweiten Längserstreckungsrichtung der B-Säule erstreckt.

Zum Herstellen der B-Säule wird bevorzugt zuerst das untere Formteil 9 mit der Innenschale 7 verbunden. Hierzu wird das untere Formteil 9 mit der Innenschale 7 verschweißt, insbesondere mittels eines Hochenergiestrahl-Schweißverfahren, das im Vergleich zu anderen Schweißverfahren die thermische Energie geringer und konzentrierter in die zu fügenden Bauteile einträgt. Durch den Versatz der Verbindungskante 21 des unteren Formteils 9 gegenüber der Außenkante 22 der Innenschale 7 ist die Verbindungskante 21 zudem seitlich gut erreichbar, wodurch der Einsatz von Hochenergiestrahl-Schweißverfahren vereinfacht wird. Als Hochenergiestrahl-Schweißverfahren eignet sich neben dem Lichtbogen- und Elektronenstrahl-Schweißverfahren vor allem das Laserstrahl-Schweißverfahren, wobei das gewählte Schweißverfahren mit oder ohne Zusatzmaterial durchgeführt werden kann. Die Hochenergiestrahlschweißnaht 25 wird über zumindest 50 % der Kantenlänge der Verbindungskante 21 erzeugt. Dabei kann eine durchgängige oder unterbrochene Bahn geschweißt werden.

Nachdem das untere Formteil 9 mit der Innenschale 7 verbunden wurde, wird das obere Formteil 10 auf das untere Formteil 9 und die Innenschale 7 derart aufgesetzt, dass zum einen das untere Formteil 9 und das obere Formteil 10 nur entlang eines Überlappungsbereiches 12 einander überlappen und zum anderen sich das obere Formteil 10 im Kopfbereich 3 an der Innenschale 7 abstützt. Das obere Formteil 10 wird weiterhin mit dem unteren Formteil 9 flächig und mit der Innenschale 7 in den Nuten 20 verklebt.

Anschließend kann die B-Säule an der Fahrzeugkarosserie befestigt werden, wobei der untere Flanschabschnitt 4 am Karosserieunterbau und der obere Flanschabschnitt 6 am Dachbereich der Karosserie angebunden wird, insbesondere mittels eines Schweißverfahrens. Grundsätzlich kann das obere Formteil 10 aber auch erst jetzt auf das untere Formteil 9 und die Innenschale 7 aufgesetzt und mit diesen verbunden werden.

Sobald die Funktionsteile 5 an der B-Säule angebracht werden, werden auch das obere Formteil 9 und das untere Formteil 10 durch die Befestigungsmittel, die durch die Durchgangsöffnungen 30, 23 greifen, kraftschlüssig miteinander verbunden.

### Bezugszeichenliste

- 1: Fußbereich
- 2: mittlerer Bereich
- 3: Kopfbereich
- 4: unterer Flanschabschnitt
- 5: Funktionsteile
- 6: oberer Flanschabschnitt
- 7: Innenschale
- 8: Außenschale
- 9: unteres Formteil
- 10: oberes Formteil
- 11: Verstärkungselement
- 12: Überlappungsbereich
- 13: Durchgangsöffnungen
- 14: Aussparungen
- 15: Klebstoffraupe
- 16: Stützbereich
- 17: unterer Endbereich
- 18: Flanschabschnitte
- 19: Außenhaut
- 20: Nuten
- 21: Verbindungskanten
- 22: Außenkanten
- 23: Seitenwandung
- 24: Schweißabschnitt
- 25: Schweißnaht
- 26: Innenraum
- 27: Außenwandung
- 28: Seitenwandung
- 29: Außenwandung
- 30: Durchgangsöffnungen
- 31: Hülse
- 32: Durchgangsöffnungen
- 33: Durchgangsöffnungen
- 34, 34': Verbindungsabschnitt
- 35: Übergangsbereich
- 36: Kerbe
- 37: Pfeil
- 38: materialgeschwächter Abschnitt

- a: Anstellwinkel
- β: Winkel
- X: Längsrichtung
- Xᵤ: erste Längserstreckungsrichtung
- Xₒ: zweite Längserstreckungsrichtung

## Patentansprüche

1. B-Säule für eine Kraftfahrzeugkarosserie, mit
einer Innenschale (7) aus Blechmaterial und
einer mehrteilig ausgebildeten Außenschale (8), die mit der Innenschale (7) verbunden ist, wobei die Außenschale (8) ein unteres Formteil (9) aus Blechmaterial und ein oberes Formteil (10)) aus faserverstärktem Kunststoff aufweist, die entlang eines Überlappungsbereiches (12) einander überlappend angeordnet und miteinander verbunden sind, derart, dass das untere Formteil (9) das obere Formteil (10) über den Überlappungsbereich (12) hinaus in einer ersten Längserstreckungsrichtung (Xᵤ) der B-Säule überragt und das obere Formteil (10) das untere Formteil (9) über den Überlappungsbereich (12) hinaus in einer zweiten Längserstreckungsrichtung (Xₒ) der B-Säule überragt.

2. B-Säule nach Anspruch 1, **dadurch gekennzeichnet,**
**dass** eine Längserstreckung des Überlappungsbereiches (12) kleiner als 70% einer Längserstreckung des unteren Formteils (9) und/oder kleiner als 50% einer Längserstreckung des oberen Formteils (10) ist.

3. B-Säule nach Anspruch 1 oder 2, **dadurch gekennzeichnet,**
**dass** das untere Formteil (9) und das obere Formteil (10) im Überlappungsbereich (12) stoffschlüssig und/oder kraftschlüssig miteinander verbunden sind.

4. B-Säule nach einem der vorherigen Ansprüche, **dadurch gekennzeichnet,**
**dass** das untere Formteil (9) und das obere Formteil (10) im Überlappungsbereich (12) durch Befestigungsmittel kraftschlüssig miteinander verbunden sind, wobei die Befestigungsmittel zum Anbringen von an der B-Säule gehaltenen Funktionsteilen (5) ausgebildet sind.

5. B-Säule nach Anspruch 4, **dadurch gekennzeichnet,**
**dass** im Überlappungsbereich (12) auf einer von der Innenschale (7) abgewandten Außenfläche des oberen Formteils (10) ein Verstärkungselement (11) aus Blechmaterial zum Abstützen zumindest eines der Befestigungsmittel angeordnet ist.

6. B-Säule nach einem der vorherigen Ansprüche, **dadurch gekennzeichnet,**
**dass** die Innenschale (7) zumindest etwa in der zweiten Längserstreckungsrichtung (Xₒ) verlaufende Stützbereiche (16) und das obere Formteil (10) entsprechende Verbindungsabschnitte (34; 34') zum Verbinden mit den Stützbereichen (16) aufweist, wobei die Innenschale (7) und das obere Formteil (10) außerhalb des Überlappungsbereiches (12) formschlüssig und/oder stoffschlüssig miteinander verbunden sind.

7. B-Säule nach Anspruch 6, **dadurch gekennzeichnet,**
**dass** die Stützbereiche (16) außerhalb des Überlappungsbereiches (12) Nuten (20) aufweisen, in denen die Verbindungsabschnitte (34; 34') des oberen Formteils (10) formschlüssig und/oder stoffschlüssig fixiert sind.

8. B-Säule nach Anspruch 6 oder 7, **dadurch gekennzeichnet,**
**dass** die Verbindungsabschnitte (34') des oberen Formteils (10) in Form von umgebogenen Randbereichen des oberen Formteils (10) gebildet sind.

9. B-Säule nach einem der vorherigen Ansprüche, **dadurch gekennzeichnet,**
**dass** das obere Formteil (10) außerhalb des Überlappungsbereiches (12) zumindest abschnittsweise einen U-förmigen Querschnitt aufweist und derart ausgebildet ist, dass eine Außenwandung (27) des oberen Formteils (10) bei einer von außen auf die Außenschale (8) einwirkenden Kraft bis zu 10% eines bauseitig festgelegten Abstandes der Außenwandung (27) zur Innenschale (7) in Richtung der Innenschale (7) elastisch federt.

10. B-Säule nach Anspruch 9, **dadurch gekennzeichnet,**
**dass** die Verbindungsabschnitte (34; 34') des zumindest abschnittsweise U-förmigen oberen Formteils (10) an Randbereichen von zwei Seitenwandungen (28) des oberen Formteils (10) gebildet sind, wobei zwischen der Außenwandung (27) und der jeweiligen Seitenwandungen (28) ein Winkel (β) zwischen 100° und 170° eingeschlossen ist.

11. B-Säule nach Anspruch 10, **dadurch gekennzeichnet,**
**dass** das obere Formteil (10) in Übergangsbereichen (35) zwischen der Außenwandung (27) und den Seitenwandungen (28) jeweils eine gelenkartige Materialschwächung, eine Kerbe (36) oder eine Knickstelle aufweist.

12. B-Säule nach Anspruch 10 oder 11, **dadurch gekennzeichnet,**
**dass** die Innenschale (7) einen materialgeschwächten Abschnitt (38) aufweist, der zwischen den Seitenwandungen (28) des oberen Formteils (10) angeordnet ist und sich oberhalb des Überlappungsbereiches (12) in der zweiten Längserstreckungsrichtung (Xo) der B-Säule erstreckt.

13. B-Säule nach einem der vorherigen Ansprüche, **dadurch gekennzeichnet,**
**dass** das untere Formteil (9) wenigstens einen Schweißabschnitt (24) zum Verbinden mit der Innenschale (7) aufweist, wobei das untere Formteil (9) und die Innenschale (7) durch Schweißen (25) miteinander verbunden sind, und wobei eine Verbindungskante (21) des unteren Formteils (9) von einer Außenkante (22) der Innenschale (7) derart beabstandet ist, dass die Innenschale (7) zwischen der Verbindungskante (21) und der Außenkante (22) einen einlagigen Flanschabschnitt (18) der B-Säule bildet.

14. Verfahren zum Herstellen einer B-Säule für eine Kraftfahrzeugkarosserie, mit den Schritten:
- Bereitstellen einer Innenschale (7) aus Blechmaterial,
- Bereitstellen eines unteren Formteils (9) aus Blechmaterial,
- Bereitstellen eines oberen Formteils (10) aus faserverstärktem Kunststoff,
- Verbinden des unteren Formteils (9) mit der Innenschale (7),
- Aufsetzen des oberen Formteils (10) auf das untere Formteil (9) und die Innenschale (7) derart, dass die beiden Formteile (9, 10) nur entlang eines Überlappungsbereiches (12) einander überlappen, wobei das untere Formteil (9) das obere Formteil (10) über den Überlappungsbereich (12) hinaus in einer ersten Längserstreckungsrichtung (Xᵤ) der B-Säule überragt und das obere Formteil (10) das untere Formteil (9) über den Überlappungsbereich (12) hinaus in einer zweiten Längserstreckungsrichtung (Xₒ) der B-Säule überragt, und
- Verbinden des oberen Formteils (10) mit dem unteren Formteil (9) im Überlappungsbereich (12).

15. Verfahren nach Anspruch 14, **dadurch gekennzeichnet,**
**dass** das obere Formteil (10) zumindest abschnittsweise formschlüssig mit dem unteren Formteil (9) verbunden wird.

## Claims

1. A B-pillar for a motor vehicle body, having
an inner panel (7) made of sheet metal material and
a multi-component outer panel (8) which is connected to the inner panel (7), wherein the outer panel (8) comprises a lower formed part (9) made of sheet metal material and an upper formed part (10) made of fibre-reinforced plastic, which two formed parts (9, 10) are arranged along a region of overlap (12) so as to overlap one another and are connected to one another such that the lower formed part (9) projects the upper formed part (10) beyond the region of overlap (12) in a first direction of longitudinal extension (Xᵤ) of the B-pillar and that the upper formed part (10) projects the lower formed part (9) beyond the region of overlap (12) in a second direction of longitudinal extension (Xₒ) of the B-pillar.

2. The B-pillar according to claim 1, **characterised in that** a longitudinal extension of the region of overlap (12) is smaller than 70% of a longitudinal extension of the lower formed part (9) and/or smaller than 50% of a longitudinal extension of the upper formed part (10).

3. The B-pillar according to claim 1 or 2, **characterised in that**, in the region of overlap (12), the lower formed part (9) and the upper formed part (10) are material-lockingly and/or force-lockingly connected to one another.

4. The B-pillar according to any one of the preceding claims, **characterised in that**, in the region of overlap (12), the lower formed part (9) and the upper formed part (10) are force-lockingly connected to one another by fixing means, wherein the fixing means are configured to attach functional parts (5) held at the B-pillar.

5. The B-pillar according to claim 4, **characterised in that**, in the region of overlap (12), on an outer face of the upper formed part (10) facing away from the inner panel (7), there is arranged a reinforcing element (11) made of sheet metal material for supporting at least one of the fixing means.

6. The B-pillar according to any one of the preceding claims, **characterised in that** the inner panel (7) comprises supporting portions (16) extending at least approximately in the second direction of longitudinal extension (Xo) and that the upper formed part (10) comprises corresponding connecting portions (34; 34') for connecting to the supporting portions (16), wherein the inner panel (7) and the upper formed part (10) are form-lockingly and/or material-lockingly connected to one another beyond the region of overlap (12).

7. The B-pillar according to claim 6, **characterised in that**, beyond the region of overlap (12), the supporting portions (16) comprise grooves (20) in which the connecting portions (34; 34') of the upper formed part (10) are form-lockingly and/or material-lockingly fixed.

8. The B-pillar according to claim 6 or 7, **characterised in that** the connecting portions (34') of the upper formed part (10) are provided in the form of bent edge regions of the upper formed part (10).

9. The B-pillar according to any one of the preceding claims, **characterised in that**, beyond the region of overlap (12), at least partially, the upper formed part (10) has a U-shaped cross-section, and the upper formed part (10) is configured such that an outer wall (27) of the upper formed part (10) resiliently suspends up to 10% of a construction-related distance between the outer wall (27) and the inner panel (7) towards the inner panel (7), when a force acting from the outside onto the outer panel (8) .

10. The B-pillar according to claim 9, **characterised in that** the connecting portions (34; 34') of the at least partially U-shaped upper formed part (10) are formed at edge regions of two side walls (28) of the upper formed part (10), wherein between the outer wall (27) and the respective side walls (28), there is enclosed an angle (β) ranging between 100° and 170°.

11. The B-pillar according to claim 10, **characterised in that**, in transition regions (35) between the outer wall (27) and the side walls (28), the upper formed part (10) comprises a joint-like material weakening, a notch (36) or a buckled area.

12. The B-pillar according to claim 10 or 11, **characterised in that** the inner panel (7) comprises a material weakened portion (38) which is arranged between the side walls (28) of the upper formed part (10) and extends above the region of overlap (12) in the second direction of longitudinal extension (Xₒ) of the B-pillar.

13. The B-pillar according to any one of the preceding claims, **characterised in that** the lower formed part (9) comprises at least one welding portion (24) for being connected to the inner panel (7), wherein the lower formed part (9) and the inner panel (7) are connected to one another by welding (25), and wherein a connecting edge (21) of the lower formed part (9) is spaced from an outer edge (22) of the inner panel (7) such that the inner panel (7) forms a single-layered flange portion (18) of the B-pillar between the connecting edge (21) and the outer edge (22).

14. A process of producing a B-pillar for a motor vehicle body, comprising the following steps:
providing an inner panel (7) made of sheet metal material;
providing a lower formed part (9) made of sheet metal material;
providing an upper formed part (10) made of fibre-reinforced plastic;
connecting the lower formed part (9) to the inner panel (7);
positioning the upper formed part (10) on the lower formed part (9) such that the two formed parts (9, 10) overlap one another only in a region of overlap (12),
wherein the lower formed part (9) projects the upper formed part (10) beyond the region of overlap (12) in a first direction of longitudinal extension (Xᵤ) of the B-pillar and that the upper formed part (10) projects the lower formed part (9) beyond the region of overlap (12) in a second direction of longitudinal extension (Xₒ) of the B-pillar; and
connecting the upper formed part (10) with the lower formed part (9) in the region of overlap (12).

15. The process according to claim 14, **characterised in that** the upper formed part (10), at least partially is form-lockingly connected to the lower formed part (9).

## Revendications

1. Montant B pour une carrosserie de véhicule automobile, comprenant
une coque intérieure (7) en matière tôlée et
une coque extérieure (8) conçue en plusieurs parties, qui est reliée avec la coque intérieure (7), la coque extérieure (8) comportant une pièce moulée inférieure (9) en matière tôlée et une pièce moulée supérieure (10) en matière plastique renforcée par fibres, qui sont placées en se chevauchant le long d'une zone de chevauchement (12) et qui sont reliées l'une à l'autre, de telle sorte que la pièce moulée inférieure (9) saillisse par-dessus la pièce moulée supérieure (10) au-delà de la zone de chevauchement (12) dans une première direction d'extension longitudinale (Xᵤ) du montant B et que la pièce moulée supérieure (10) saillisse par-dessus la pièce moulée inférieure (9) au-delà de la zone de chevauchement (12) dans une deuxième direction d'extension longitudinale (Xₒ) du montant B.

2. Montant B selon la revendication 1, **caractérisé en ce**
**qu'**une extension longitudinale de la zone de chevauchement (12) est inférieure à 70 % d'une extension longitudinale de la pièce moulée inférieure (9) et/ou inférieure à 50 % d'une extension longitudinale de la pièce moulée supérieure (10).

3. Montant B selon la revendication 1 ou 2, **caractérisé en ce**
**que** dans la zone de chevauchement (12), la pièce moulée inférieure (9) et la pièce moulée supérieure (10) sont reliées l'une à l'autre par matière et/ou par complémentarité de force.

4. Montant B selon l'une quelconque des revendications précédentes, **caractérisé en ce**
**que** dans la zone de chevauchement (12), la pièce moulée inférieure (9) et la pièce moulée supérieure (10) sont reliées l'une à l'autre par complémentarité de force par des moyens de fixation, les moyens de fixation étant destinés à être montés sur des pièces fonctionnelles (5) maintenues sur le montant B.

5. Montant B selon la revendication 4, **caractérisé en ce**
**que** dans la zone de chevauchement (12), sur une surface extérieure opposée à la coque intérieure (7) de la pièce moulée supérieure (10) est placé un élément de renfort (11) en matière tôlée, destiné à l'appui d'au moins l'un des moyens de fixation.

6. Montant B selon l'une quelconque des revendications précédentes, **caractérisé en ce**
**que** la coque intérieure (7) comporte au moins des zones d'appui (16) s'écoulant approximativement dans la direction d'extension longitudinale (Xₒ) et la pièce moulée supérieure (10) comporte des segments de liaison (34 ; 34') correspondants, destinés à être reliés avec les zones d'appui (16), la coque intérieure (7) et la pièce moulée supérieure (10) étant reliées l'une à l'autre par complémentarité de forme et/ou par matière à l'extérieur de la zone de chevauchement (12).

7. Montant B selon la revendication 6, **caractérisé en ce qu'**à l'extérieur de la zone de chevauchement (12), les zones d'appui (16) comportent des rainures (20) dans lesquelles les segments de liaison (34 ; 34') de la pièce moulée supérieure (10) sont fixés par complémentarité de forme et/ou par matière.

8. Montant B selon la revendication 6 ou 7, **caractérisé en ce**
**que** les segments de liaison (34') de la pièce moulée supérieure (10) sont conçus sous la forme de zones marginales recourbées de la pièce moulée supérieure (10).

9. Montant B selon l'une quelconque des revendications précédentes, **caractérisé en ce**
**qu'**à l'extérieur de la zone de chevauchement (12), la pièce moulée supérieure (10) présente au moins par endroits une section transversale en forme de U et est conçue de telle sorte que lors de l'exercice d'une force agissant à partir de l'extérieur sur la coque extérieure (8), une paroi extérieure (27) de la pièce moulée supérieure (10) fasse ressort en direction de la coque intérieure (7), à raison de jusqu'à 10 % d'un écart fixé niveau construction entre la paroi extérieure (27) et la coque intérieure (7).

10. Montant B selon la revendication 9, **caractérisé en ce**
**que** les segments de liaison (34 ; 34') de la pièce moulée supérieure (10) en forme de U au moins par endroits sont formés sur des zones marginales de deux parois latérales (28) de la pièce moulée supérieure (10), entre la paroi extérieure (27) et les parois latérales (28) concernées étant inclus un angle (β) compris entre 100° et 170°.

11. Montant B selon la revendication 10, **caractérisé en ce**
**que** dans des zones de passage (35) entre la paroi extérieure (27) et les parois latérales (28), la pièce moulée supérieure (10) comporte chaque fois un affaiblissement de matière de forme articulée, une encoche (36) ou un point d'inflexion.

12. Montant B selon la revendication 10 ou 11, **caractérisé en ce**
**que** la coque intérieure (7) comporte un segment (38) affaibli en matière qui est placé entre les parois latérales (28) de la pièce moulée supérieure (10) et qui s'étend au-dessus de la zone de chevauchement (12) dans la deuxième direction d'extension longitudinale (Xₒ) du montant B.

13. Montant B selon l'une quelconque des revendications précédentes, **caractérisé en ce**
**que** la pièce moulée inférieure (9) comporte au moins un segment soudé (24) destiné à la relier avec la coque intérieure (7), la pièce moulée inférieure (9) et la coque intérieure (7) étant reliées l'une à l'autre par soudage (25) et une arête de liaison (21) de la pièce moulée inférieure (9) étant écartée d'une arête extérieure (22) de la coque intérieure (7) de telle sorte que la coque intérieure (7) forme entre l'arête de liaison (21) et l'arête extérieure (22) un segment de bride (18) monocouche du montant B.

14. Procédé destiné à fabriquer un montant B pour une carrosserie de véhicule automobile, comportant les étapes :
- de la mise à disposition d'une coque intérieure (7) en matière tôlée,
- de la mise à disposition d'une pièce moulée inférieure (9) en matière tôlée,
- de la mise à disposition d'une pièce moulée supérieure (10) en matière plastique renforcée par fibres,
- de la liaison de la pièce moulée inférieure (9) avec la coque intérieure (7),
- de la pose de la pièce moulée supérieure (10) sur la pièce moulée inférieure (9) et la coque intérieure (7), de telle sorte que les deux pièces moulées (9, 10) ne se chevauchent mutuellement que le long d'une zone de chevauchement (12), la pièce moulée inférieure (9) saillant par-dessus la pièce moulée supérieure (10) au-delà de la zone de chevauchement (12) dans une première direction d'extension longitudinale (Xᵤ) du montant B et la pièce moulée supérieure (10) saillant par-dessus la pièce moulée inférieure (9) au-delà de la zone de chevauchement (12) dans une deuxième direction d'extension longitudinale (Xₒ) du montant B et
- de la liaison de la pièce moulée supérieure (10) avec la pièce moulée inférieure (9) dans la zone de chevauchement (12).

15. Procédé selon la revendication 14, **caractérisé en ce**
**qu'**on relie par complémentarité de forme la pièce moulée supérieure (10) au moins par endroits avec la pièce moulée inférieure (9).
